# EUROPEAN PATENT APPLICATION

(11) **EP 0 631 134 A2**
(43) Date of publication of application: **28.12.1994**
(21) Application number: 94304130.1
(22) Date of filing: 08.06.1994
(51) Int. Cl.: G01N 27/447

(54) **Platform for conducting electrophoresis, and an electrophoresis plate for use with the platform**

(30) Priority: 21.06.1993 US 79229; 07.07.1993 US 86916
(71) Applicant: HELENA LABORATORIES CORPORATION, Beaumont Texas 77704-0752 (US)
(72) Inventor: Sarrine, Robert J., Beaumont, Texas 77707 (US)
(74) Representative: W.P. Thompson & Co.

(57) **Abstract**

The present specification discloses a platform (28,28') for conducting electrophoresis with an electrophoresis plate (10) which plate includes a substrate (12) and an electrophoretic medium layer (18) with a first and second end regions (22) on the substrate, said platform having support means, (30,30') for supporting the substrate of the electrophoresis plate; a first electrode (72,126) to electrically contact the first end region (22) of the electrophoresis plate; and a second electrode (72,126) to electrically contact the second end region (22) of the electrophoresis plate.

## Description

The present invention relates to a platform for conducting electrophoresis with an electrophoresis plate, and to the electrophoresis plates used with the platform.

The present invention is directed in general to the field of electrophoretic analysis of liquid samples, such as biological specimens.

Valuable diagnostic information can be obtained by an analysis of certain biological fluids from a patient, such as blood serum. Electrophoresis is known to be an effective technique for separating the various components of such fluid for subsequent analyses using optical densitometry techniques. The physical phenomenon underlying electrophoretic analysis is that particles which have an effective electric charge and which are deposited on a solid or semi-solid medium are caused to move with respect to the medium by an electric field applied across the medium. Particles of different types move at different rates, so a mixture of different types of particles is separated into its different components or fractions by electrophoresis. These separated fractions may then be stained by exposing them to a suitable reagent so that the fractions can be optically detected using visible or ultraviolet light.

The electrophoresis process has been performed through a series of manual steps for many years. The manual process typically has started with the operator preparing an electrophoresis chamber by filling appropriate cavities of the chamber with buffer solution. The electrophoretic medium is typically a gel substance such as polyacrylamide or agarose that has been coated onto a Mylar (trademark) substrate to form an electrophoresis plate. The liquid sample to be examined is typically blood serum, but of course may be other liquids.

Consistent volumes of the samples are applied to precise locations on the electrophoretic medium. Electrophoresis is then performed using a precise high voltage applied for a precise interval of time across the buffer cavities.

After electrophoresis has been completed, the operator applies a uniform coating of a staining reagent, or stain, to the surface of the medium. The staining reagent chemically combines with the separated fractions of the fluid sample, causing the fractions to exhibit optical characteristics.

Next, the separated fluid samples containing the stain are incubated, then dried, and then the samples are examined using optical densitometry techniques to determine which fractions were present in the original samples and to find their relative proportions.

The manual process described above requires careful attention to provide accurate and reproducible results. Techniques for performing electrophoresis automatically have been developed. For example, U.S. Patents 4,360,418 and 4,391,689 to Golias described an automated electrophoresis and staining apparatus and method. U.S. Patents 4,810,348, 4,890,247, 4,909,920, and 4,954,237 to Sarrine et al each describe an automated electrophoresis apparatus and method. An automated applicator assembly with pipettes for transferring samples to the electrophoretic medium during automated analysis is described in U.S. Patents 4,827,780 and 4,938,080 to Sarrine et al.

The present invention seeks to provide an improved platform on which electrophoresis is conducted and an improved electrophoresis plate for use on the platform.

In accordance with one aspect of the invention, the improved platform includes a support having a surface, at least a first electrode which extends upward from the surface, and at least a second electrode which extends upward from the surface. The electrophoretic plate used with the platform includes a substrate and an electrophoretic medium layer on the substrate, the electrophoretic medium layer having first and second end regions. The electrophoresis plate has at least a first aperture which extends through the substrate and at least a second aperture which extends through the substrate. When the electrophoresis plate is installed on the platform, the first electrode of the platform extends through the first aperture and the second electrode of the platform extends through the second aperture of the electrophoresis plate. In a preferred form of this invention, plural electrodes and plural apertures in the substrate and gel are provided.

In accordance with another aspect of the invention, an electrophoresis platform includes a support having a surface, a first electrode to electrically contact a first end region of an electrophoretic medium layer of an electrophoresis plate and a second electrode to electrically contact a second end region of the electrophoretic medium layer.

In accordance with another aspect of the invention, an electrophoresis platform for conducting electrophoresis with an electrophoresis plate which plate includes a substrate and an electrophoretic medium layer with first and second end regions on the substrate, the platform includes a support means, having a surface, for supporting the substrate of the electrophoresis plate; a first electrode to electrically contact the first end region of the electrophoresis plate; and a second electrode to electrically contact the second end region of the electrophoresis plate.

In accordance with a further aspect of the invention, the support means of electrophoresis platform further includes a plastic tray having a recessed region with a bottom portion and an opening in the bottom portion, and a heat-transfer member which protrudes into the opening, a first electrode of the platform is mounted on the bottom portion adjacent the opening and a second electrode of the platform is mounted on the bottom portion adjacent the opening, with the electrophoresis plate being supported above the heat-transfer member.

According to yet another aspect of the invention, the support means for the electrophoresis platform further comprises a ceramic plate disposed in the recessed region of the bottom portion of the tray, the ceramic plate having at least one first opening through which a first electrode extends, at least one additional opening through which a second electrode extends, and a central opening between the first opening and the additional opening, the heat-transfer member protruding through an opening in the bottom portion of the recessed region of the tray and into the central opening in the ceramic plate.

It is in accordance with another aspect of the invention that the electrophoresis platform includes a printed circuit board below the tray, the printed circuit board having a first conductive region for supplying electrical power to a first electrode and a second conductive region for supplying electrical power to a second electrode, a first spring contact to electrically connect the first conductive region to the first electrode, and a second spring contact to electrically connect the second conductive region to the second electrode.

In accordance with another aspect of the invention, the electrophoresis platform may include at least one Peltier device adjacent the heat-transfer member, and a heat sink adjacent the Peltier device.

In accordance with another aspect of the invention, the electrophoresis plate includes end regions formed of an electrophoretic medium layer wherein at least one electrode is configured to form a cavity in an end region of the electrophoresis plate.

In accordance with another aspect of the present invention, the electrophoresis plate includes a separation region including gel material, and two spaced-apart end regions each including gel material and electrode buffer material, each end region including either at least one electrode receiving cavity formed therein or a substrate in contact with said end region, said substrate having an aperture aligned thereunder. In the embodiment wherein the substrate is provided in contact with the end region, the electrode may form an aperture in the end region. In each embodiment, the electrophoresis plate may include alignment means such that the electrophoresis plate is properly aligned on the electrophoresis platform.

The present invention will now be further described, by way of example, with reference to the accompanying drawings, in which:-
Figure 1 is a perspective view of an electrophoresis plate for use in the present invention;
Figure 2 is a top plan view of an electrophoresis platform, constructed according to the present invention and additionally including a sample tray;
Figures 3 and 4 together provide an exploded perspective view of the electrophoresis platform shown in Figure 2;
Figure 5 is a sectional view of an alternative embodiment of electrophoresis platform constructed according to the present invention and additionally shows an electrical receptacle which cooperates with the platform when the platform is at a predetermined position; and
Figure 6 is a sectional view showing a bipolar power supply connected to the electrodes of the electrophoresis platform of the embodiment shown in Figure 5.

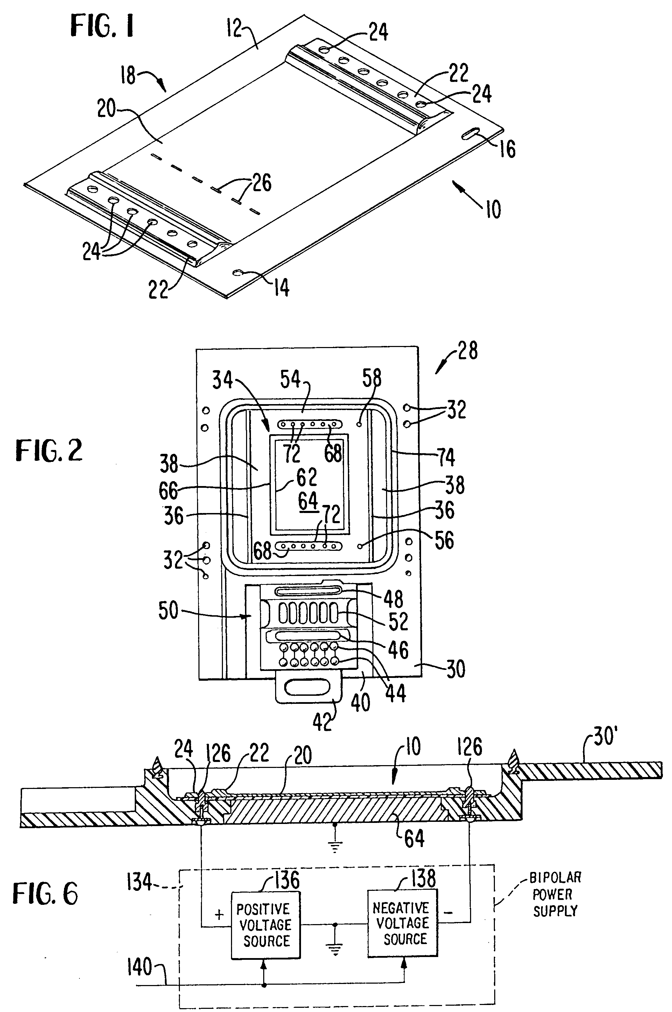

Figure 1 illustrates an electrophoresis plate 10 that can be used with an electrophoresis platform. Plate 10 includes a Mylar (trademark) substrate 12 with a hole 14 and a slot 16 in it. Substrate 12 is about 8.57 cm wide and about 12.54 cm long. Substrate 12 supports an electrophoretic medium layer 18 having a thin central region 20 between two mirror-image end regions 22. Central region 20 is approximately 400 microns thick and end regions 22 are substantially thicker, as shown. Electrophoretic medium layer 18 is a gel-like layer which includes agarose, water, and a buffer. The agarose provides a microporous support which has tiny pores that contain the water, and the buffer serves as an electrolyte which renders the water electrically conductive.

Each end region 22 has at least one and, as illustrated, six apertures 24 which extend through the agarose and the substrate 12. Central region 20 has six wells 26. Wells 26 are elongated depressions in the agarose of central region 20 and do not extend through substrate 12.

Plate 10 may be used, for example, to confirm a diagnosis of myocardial infarction. In a typical situation, serum drawn from the patient at three successive hourly intervals would be placed in three of the wells 26. A reference or calibrator fluid, a normal control fluid, and an abnormal control fluid would be placed in the other three wells 26. Electrophoresis would then be conducted by establishing a DC electric field from one end region 22 to the other end region 22, causing different fractions in the fluids to travel through the agarose at different rates. Following electrophoresis the plate 10 would be treated with a reagent in response to which reagent the different fractions will fluoresce under ultraviolet light.

From the above description of microphoresis plate 10 it would be apparent that the term "plate" does not imply a rigid structure. Plate 10 is, instead, moderately flexible.

Figure 2 illustrates a view of an electrophoresis platform 28 from the top. Platform 28 includes a plastic tray 30 on which plate 10 is supported during electrophoresis. Tray 30 has apertures 32 adjacent its longitudinal edges for accommodating mounting screws. Tray 30 has a recessed region 34 with two ribs 36. Outward of ribs 36 are troughs, or recesses 38.

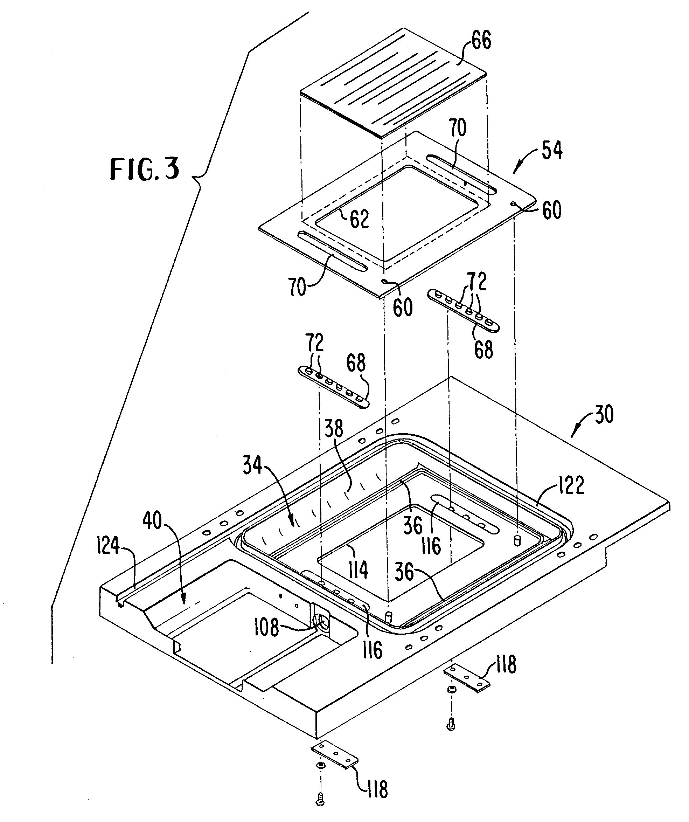

Tray 30 additionally has a recessed region 40 for accommodating a sample tray 42. Sample tray 42 has two rows of wells 44. There are six wells 44 in each of those rows, and either row of wells can be used to hold the six samples that are to be transferred to the wells 26 of electrophoresis plate 10 (see Figure 1). Sample tray 42 has receptacles 46 and 48 for cleaning solutions and a region 50 with six elongated depressions 52 in it. During use, samples are transferred from the wells 44 to the wells 26 (see Figure 1) and are washed with solutions from receptacles 46 and 48. A strip of absorbent blotting paper is placed on the region 50. A ceramic frame 54 is mounted in recessed region 34 of tray 30. Frame 54 has two apertures 60 (Figure 3) and pegs 56 and 58, which are part of tray 30, extend through the apertures. Plate 54 has a rectangular opening 62, and a copper heat-transfer member 64 protrudes into opening 62. A thin Mylar (trademark) film 66 is adhesively attached to member 64 and to frame 54 at the periphery of opening 62 and the film protects member 64 from fluid. Frame 54 has two elongated slots which expose conductive members 68. Conductive members 68 are made of compressed graphite and each has at least one electrode 72. In the illustrated embodiment six electrodes 72 are provided.

A resilient sealing member 74 is mounted on tray 28 around recessed region 34. Member 74 is preferably a flexible strip of the type of material used in automobile windshield wipers.

During use, a liquid surfactant is applied onto film 66 to promote good thermal transfer. An electrophoresis plate 10 as shown in Figure 1 is then deposited in recessed region 34 of the tray 30, with the longitudinal edges of substrate 12 abutting ribs 36. Peg 56 extends through aperture 14 and peg 58 extends through slot 16 to precisely orient the electrophoresis plate 10 with respect to tray 30. Additionally, electrodes 72 extend through apertures 24 and make electrical contact with the agarose.

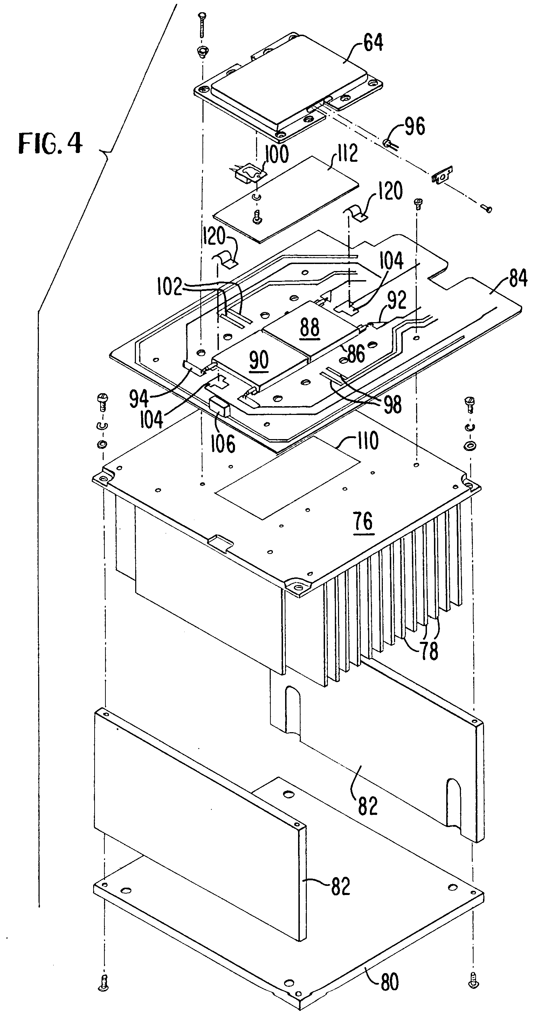

Reference Figures 3 and 4, electrophoresis platform 28 includes a heat sink 76 which is made from extruded aluminum and which includes cooling fins 78. Heat sink 76 is mounted on walls 82 and the walls 82 are attached to a support 80. A printed circuit board (PCB) 84 has conductor patterns on both top and bottom surfaces. Plated-through holes, not shown, are used to make electrical connections between the conductors on the top surface and the bottom surface. PCB 84 has a central rectangular opening 86. Peltier devices 88 and 90 are mounted in the opening 86, with Peltier device 88 being soldered to conductive regions 92 on PCB 84 and Peltier device 90 being soldered to conductive regions 94. A temperature detector 96, mounted in a case, is soldered to conductive regions 98 on the PCB and an over-temperature circuit breaker 100 is soldered to conductive regions 102 on the PCB. The case of temperature detector 96 is electrically grounded. Conductive regions 104 are part of the conductor pattern on the upper surface of PCB 84. An optical sensor 106 is soldered to the conductor pattern to detect, through an opening 108 in tray 30, whether sample tray 42 (Figure 2) is present in recessed region 40.

The conductor pattern on the bottom surface of PCB 84 is covered with an insulating layer. Furthermore, a film 110 of heat transfer compound is disposed on the upper surface of heat sink 76 between the Peltier devices 88,90 and the heat sink. Film 110, is pliable and conforms to surface irregularities that may be present on heat sink 76 and the Peltier devices, and is available from Berkuest Company under the designation SX-Q2. PCB 84 is secured to the top surface of heat sink 76, and if desired, a heat-transfer gel may additionally be used between the Peltier devices and film 110. Another film 112 of heat transfer compound is disposed between Peltier devices 88 and 90 and heat-transfer member 64, which is secured to heat sink 76 through openings in PCB 84. Heat-transfer gel may be applied to the bottom surface of member 64 and the top surfaces of Peltier devices 88 and 90. Sensor 96 and circuit breaker 100 are mounted on member 64.

With continuing reference to Figures 3 and 4, heat-transfer member 64 extends through an opening 114 in tray 30 and is positioned so that the top surface of heat transfer member 64 is at the same height as the top surface of ceramic frame 54. Conductive members 68 are positioned in the elongated recesses 116 in tray 30 and are secured to metal straps 118 through screw apertures at the bottom of recesses 116. Straps 118 are positioned to make electrical contact with contact springs 120 which are soldered to the conductive regions 104 on PCB 84. High voltage can be transferred to electrodes 72 through the PCB 84 without soldered connections between conductive members 68 and PCB 84. This facilitates assembly of platform 28, and permits tray 30 to be removed from PCB 84 during replacement of conductive members 68.

After conductive members 68 have been mounted on tray 30 and frame 54 has been installed, film 66 is adhesively applied as previously explained.

Tray 30 has a channel 122 around the periphery of recessed region 34 to receive resilient sealing member 74 (Figure 2). A lead-in channel 124 is provided in tray 30 to permit member 74 to be inserted into channel 122 during assembly.

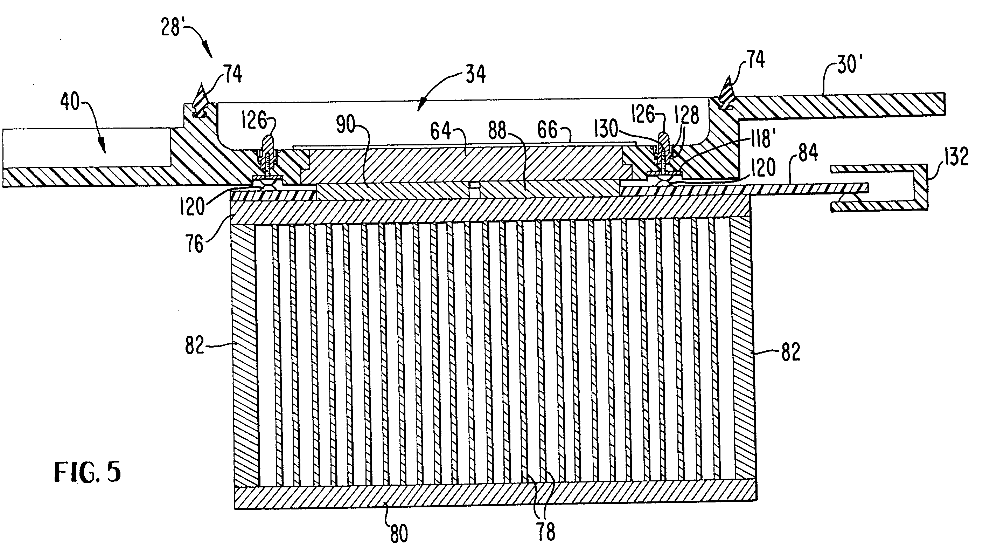

Figure 5 illustrates a cross-sectional view of a platform 28' for conducting electrophoresis in accordance with an alternate embodiment of the present invention. The electrophoresis platform 28' shown in Figure 5 is the same as platform 28 of the first embodiment except that (a) platform 28' does not include a ceramic plate 54, (b) twelve individual electrodes 126 are used rather than two conductive members 68 having six electrodes 72 each, and (c) the tray 30' of platform 28' is modified to accommodate individual electrodes 126 rather than conductive members 68.

In Figure 5, each electrode 126 is inserted in a blind bore in tray 30' and each electrode is sealed by a pair of O-rings 128. Each electrode 126 has a threaded bore which receives a screw 130 extending through an opening in a strap 118'. Contact springs 120 on PCB 84 make electrical contact with the head of one of the screws 130 on each end of the tray 30'. Electrodes 126 are made of compressed graphite.

Typically, the conductor patterns on PCB 84 are electrically connected to external circuitry which receives signals from sensors 96, 100, and 106 (Figure 4) and which supplies power to Peltier devices 88 and 90 (Figure 4). Conductive regions 104 (Figure 4), in contrast, are not always electrically connected to external circuitry. Figure 5 schematically illustrates a receptacle 132 which electrically contacts conductor patterns on PCB 84 that are connected to conductive regions 104 when electrophoresis platform 28' is withdrawn. Accordingly, high voltage is supplied to electrodes 126 (and electrodes 72 in the first embodiment) only when the electrophoresis platform is in the withdrawn position.

Figure 6 illustrates the electrical connection to the electrodes 126 when an electrophoresis plate 10 is installed in tray 30' and the electrophoresis platform is in its withdrawn position. Various features of the electrophoresis platform, such as heat sink 76 and PCB 84, are not shown in Figure 6.

A bipolar power supply 134 includes a positive voltage source 136 and a negative voltage source 138 which are connected in series. Source 136 supplies a potential which is positive with respect to ground to the electrodes 126 at one end of electrophoresis plate 10, while source 138 supplies a potential that is negative with respect to ground to the electrodes 126 at the other end of plate 10. Sources 136 and 138 receive a control signal over a conductor 140 to adjust the total potential difference provided by power supply 134.

Typical values for the current and voltage supplied across plate 10 during rapid electrophoresis are 30 milliamps and 1500 volts, respectively. This represents 45 watts dissipated by plate 10. The resulting heat is transferred via heat-transfer member 64 and Peltier devices 88 and 90 to heat sink 76. During portions of the electrophoresis procedure, (i.e., incubation and drying) the electrical current through Peltier devices 88 and 90 is reversed to help heat plate 10. During electrophoresis, a cover member engages resilient sealing member 74 to form an electrophoresis chamber on the electrophoresis platform.

During electrophoresis, the electrolytic decomposition of water in agarose layer 18 (see Figure 1) of plate 10 causes bubbles of hydrogen gas to form at the electrodes 126 connected to voltage source 138 and oxygen bubbles to form at the electrodes 126 connected to voltage source 136. The hydrogen gas and oxygen bubbles escape to the atmosphere through apertures 24.

By using a bipolar power supply 134 for electrophoresis, the difference between each electrode 126 and ground potential is one-half of the total voltage across electrophoresis plate 10. For example, to obtain 1500 volts across plate 10, voltage source 136 is set at +750 volts and voltage source 138 is set at -750 volts. The voltage at each electrode 126 differs from ground potential by 750 volts to reduce or avoid entirely any damage due to arcing. The electrophoresis platform 28 of the first embodiment has increased protection for whatever arcing might possibly occur since a ceramic plate 54 is used. Although plate 54 is used in a wet environment the plate 54 prevents the heat of an electrical arc from damaging the plastic of tray 30.

Plate 54 is made of a machinable ceramic which is available from Dow Chemical Company under the trademark "Macor." The ceramic is baked in a billet and sliced. The apertures 60, opening 62, and slots 70 (see Figure 3) are then machined into a slice.

The present invention does not require that the number of wells 26 corresponds to the number of electrodes. Furthermore it is within the scope of this invention that the electrodes may create or form the apertures in the gel when the plate is placed on the platform.

It will be understood that the above description of the present invention is susceptible to various modifications, changes and adaptations, and the same are intended to be comprehended within the meaning and range of equivalents of the appended claims.

The features disclosed in the foregoing description in the following claims and/or in the accompanying drawings may, both separately and in any combination thereof, be material for realizing the invention in diverse forms thereof.

## Claims

1. A platform (28, 28') for conducting electrophoresis with an electrophoresis plate (10) which plate includes a substrate (12) and an electrophoretic medium layer (18) with first and second end regions (22) on the substrate, said platform characterized by:
support means, (30, 30') having a surface, for supporting the substrate of the electrophoresis plate;
a first electrode (72, 126) to electrically contact the first end region (22) of the electrophoresis plate; and
a second electrode (72, 126) to electrically contact the second end region (22) of the electrophoresis plate.

2. A platform according to claim 1, further comprising a plurality of electrodes (72, 126).

3. A platform according to claim 1 or 2, wherein at least one of the electrodes (72) is part of an elongated conductive member (168).

4. A platform according to claim 2, wherein at least two electrodes (72, 126) are electrically connected together to have the same electrical polarity.

5. A platform according to claim 1, wherein the support means (30, 30') further comprises a plastic tray having a recessed region (34) with a bottom portion and an opening (62) in the bottom portion, and a heat-transfer member (64) which protrudes into the opening, a first electrode being mounted on the bottom portion adjacent the opening and a second electrode being mounted on the bottom portion adjacent the opening, the electrophoresis plate being supported above the heat-transfer member (64).

6. A platform according to claim 5, wherein the support means further comprises a ceramic plate (54) disposed in the recessed region (34) of the bottom portion of the tray, the ceramic plate having at least one opening (70) through which a first electrode extends, at least one additional opening (70) through which a second electrode extends, and a central opening (62) between the first opening and the additional opening, the heat-transfer member (64) protruding through an opening in the bottom portion of the recessed region of the tray and into the central opening (62) in the ceramic plate (54).

7. A platform according to claim 5 or 6, further comprising a printed circuit board (84) below the tray, the printed circuit board having a first conductive region (92) for supplying electrical power to a first electrode and a second conductive region (94) for supplying electrical power to a second electrode, a first spring contact (120) to electrically connect the first conductive region to the first electrode, and a second spring contact (120) to electrically connect the second conductive region to the second electrode.

8. A platform according to claim 1, 2, 3, 4, 5, 6 or 7, further comprising bipolar power supply means (134) for supplying a first electrode with an electrical potential that is positive with respect to ground potential and for supplying a second electrode with an electrical potential that is negative with respect to ground potential.

9. A platform according to claim 5, 6, 7 or 8, further comprising at least one Peltier device (88) adjacent the heat-transfer member (64), and a heat sink (76) adjacent the Peltier device.

10. A platform according to claim 1, wherein at least one first electrode (72, 126) is configured to form a cavity in an end region of the electrophoresis plate.

11. An electrophoresis plate (10) characterized by:
a separation region (20) including gel material (18), and
two spaced-apart end regions (22) including gel material and electrode buffer material, each end region including either at least one electrode receiving cavity formed therein (24) or a substrate (12) in contact with said end region, said substrate having an aperture aligned thereunder.

12. An electrophoresis plate according to claim 15, further including a substrate (12) under each end region.

13. An electrophoresis plate according to claim 11 or 12, wherein the substrate (12) includes a plurality of apertures to receive a plurality of electrodes (72, 126).
